# EUROPÄISCHE PATENTANMELDUNG

(11) **EP 0 756 813 A1**
(43) Veröffentlichungstag der Anmeldung: **05.02.1997**
(21) Anmeldenummer: 95112178.9
(22) Anmeldetag: 03.08.1995
(51) Int. Cl.: A01D 34/66

(54) **Kreiselmähmaschine**

(71) Anmelder: Hölzle, Max, D-87650 Baisweil (DE)
(72) Erfinder: Hölzle, Max, D-87650 Baisweil (DE)

(57) **Zusammenfassung**

Eine Kreiselmähmaschine weist an einem an einen Schlepper anschließbaren, ein Mähwerkantrieb (5) tragenden, Anbaumaschinenrahmen (1a) mit mindestens zwei Mähwerken (3) auf und an diesem ist zwecks wählbarer Schwad- und Streuarbeit sowie einer schmalen Transportstellung an beiden Seiten je ein mit wenigstens einem Mähwerk versehener schwenkbarer Maschinenrahmen (1b) angeordnet.

## Beschreibung

Die Erfindung betrifft eine Kreiselmähmaschine mit an einem Schlepper anschließbaren Anbauteil und einem Mähwerkantrieb tragenden Maschinenrahmen.

Die Breite der Mähmachinen ist einschließlich dem vorgeschriebenen Seitenschutz gesetzlich auf ein Höchstmaß von 3 m beschränkt. Aber selbst schon bei solchen in Schlepperbreite von 2,20 ausgeführten gibt es beim täglichen Futterholen Schwierigkeiten bei der Stalldurchfahrt. Die Zahl der Mähwerke und die Arbeitsbreite ist hierbei somit stark eingeschränkt. Bei bekannten Mähmaschinen mit größerer Mähwerkanzahl sind seitliche Mähwerke mittels am Maschinenrahmen vorgesehener Gelenke nach oben schwenk- und feststellbar. Diese stören jedoch bei Durchfahrten und behindern bei Frontanbau die Sicht.

Ein weiteres Problem besteht darin, daß bei den gebräuchlichen Mähmaschinen mit z.B. vier Mähwerken ein Schwad nur mit Hilfe von Seitenblechen zu ziehen ist. Der so gebildete Schwad ist jedoch für das Trocknen und Anstreuen ungünstig. Alle somit zu fordenden Bedingungen gemeinsam sind mit den bekannten Kreiselmähmaschinen nicht zu erfüllen.

Hier will die Erfindung durch eine im wesentlichen dreiteilige Ausführung des Maschinenrahmens, wie in der Zeichnung an Hand einiger Einstellungen erläutert, abhelfen.

### Beschreibung

Es zeigen
Figur 1 bis 3 eine Maschine mit vier Mähewerken (3) in verschiedenen Arbeitstellungen,
Figur 4 eine Maschine mit 10 Mähwerken und
Figur 5 eine Maschine mit 6 Mähwerken.

In der Zeichnung ist mit 1a ein U-förmiger Anbaumaschinenrahmen und mit 1b an jeder Seite desselben um vertikale Drehachsen aufweisenden Gelenke 2 schwenkbare Maschinenrahmen 1b bezeichnet. An den Schenkelenden des Anbaumaschinenrahmens 1a sowie an den seitlichen Machinenrahmen sind Mähwerke 3 angeordnet. Diese können als Mähtrommeln oder als Mähscheiben ausgebildet sein und werden durch einen an dem Anbaumaschinenrahmen 1 angeordneten, einen Schlepperzapfwellenanschluß 5a aufweisenden Maschinenantrieb 5 in jeder der einzelnen Schwenkstellungen angetrieben. Zu diesem Zweck sind die Gelenke 2 koaxial zu den Antriebswellen der Mähwerke angeordnet. 4 sind Gelenke mit horizontaler Drehachse. Zum Antrieb können, wie angedeutet, Gelenkwellen 6, jedoch auch Riementriebe dienen.

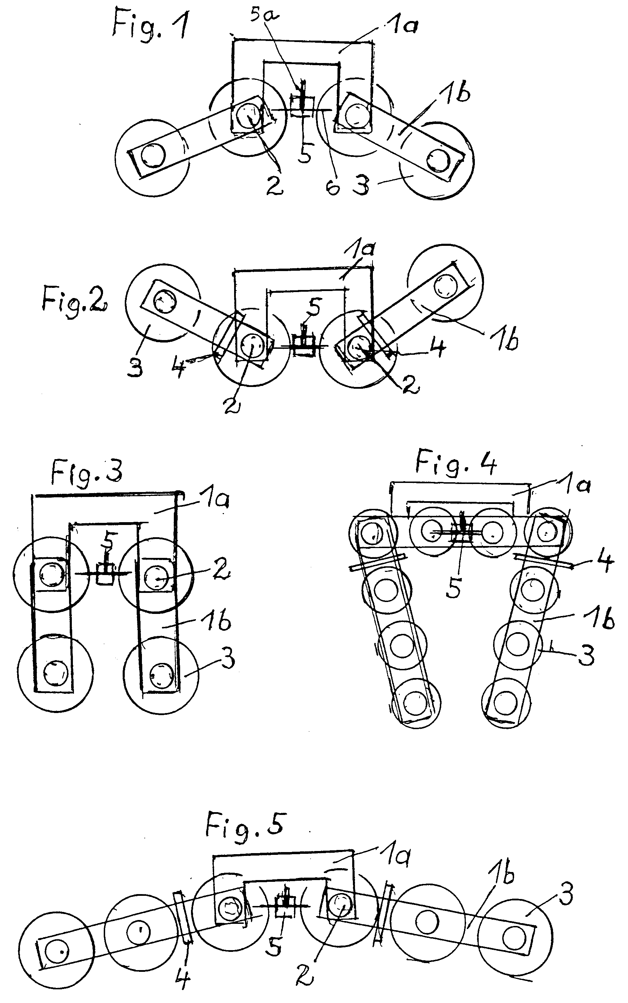

Die Wirkunsgweise ist folgende:
Die Maschinen können sowohl im Front- als auch im Heckanbau am Schlepper arbeiten und können aber auch angehängt werden. Durch die Schwenkbarkeit lassen sich verchiedene Variationen von Schwadablagen bilden. Die Maschine gemäß Figur 1 streut in der gezogenen Stellung zwei breite Schwaden und in der Stellung gemäß Figur 2 eine enge hohe Schwad. Die Gelenke 4 ermöglichen dabei eine Anpassung an Bodenunebenheiten. In der in Figur 3 gezeigten Transportstellung weist die Maschine eine in keiner Weise behindernde Breite auf. Durch die in den Figuren 4 und 5 angedeutete, nun mögliche große Anzahl Mähwerke erzielt man bei an sich bekannter Umstellung der Drehrichtungen der Mähwerke einen größeren Schwad ohne Zuhilfenahme von Seitenblechen oder eine große Streubreite und auch der Transport ist unproblematisch.

## Patentansprüche

1. Kreiselmähmaschine mit an einem an den Schlepper anschließbaren, ein Mähwerkantrieb (5) tragenden, Anbaumaschinenrahmen (1a), gekennzeichnet durch folgende Merkmale:
- an dem Anbaumaschinenrahmen (1a) sind wenigstens zwei Mähwerke (3) angeordnet,
- an beiden Seiten des Anbaumaschinenrahmens (1a) ist je ein seitlicher, mit wenigstens einem Mähwerk versehener, an Gelenken (2) mit vertikaler Drehachse schwenkbarer und feststellbarer, Maschinenrahmen (1b) angelenkt.

2. Kreiselmähwerk nach Anspruch 1, dadurch gekennzeichnet, daß der Anbaumaschinenrahmen (1a) U-förmig ausgeführt ist und zwischen dessen Schenkeln ein Mähwerkantrieb 5 mit seinem, nach der Anbauseite ausgerichteter, Zapfwellenanschluß (5a) angeordnet ist.

3. Kreiselmähwerk nach Anspruch 1, dadurch gekennzeichnet, daß die seitlichen Maschinenrahmen mittels eines Gelenks (4) mit horizontaler Drehachse nach oben und unten schwenkbar sind.

4. Kreiselmähwerk nach Anspruch 1, dadurch gekennzeichnet, daß, daß die Drehachsen der Gelenke (2) koaxial mit den Antriebswellen der am Anbaurahmen (1a) befindlichen Mähwerke (3) angeordnet sind.

5. Kreiselmähwerk nach Anspruch 1, dadurch gekennzeichnet, daß das Verschwenken der seitlichen Maschinenrahmen (1b) mechanisch oder hydraulisch bewirkt wird.
